# EUROPEAN PATENT APPLICATION

(11) **EP 4 607 423 A1**
(43) Date of publication of application: **27.08.2025**
(21) Application number: 25158648.3
(22) Date of filing: 18.02.2025
(51) Int. Cl.: G06Q 10/0631, G06Q 10/0639, G06Q 50/26, H04L 67/00, H04W 4/30, H04W 4/38

(54) **INTEGRATED URBAN DATA MANAGEMENT SYSTEM**

(30) Priority: 21.02.2024 IT 202400003592
(71) Applicant: Envision S.r.l., 90139 Palermo (PA) (IT)
(72) Inventor: GATTOLA, Matteo, I-90139 Palermo (PA) (IT)
(74) Representative: Fiammenghi, Eva

(57) **Abstract**

Integrated urban data management system for "Smart City" type infrastructures, comprising:
- physical server (1);
- dedicated storage (2);
- two-node failover cluster (3);
- virtualization technology (4);
- antivirus solutions (7);
- firewall (8) with content filtering, anti-virus and anti-spam;
- cloud-based backup and restore platform (9);
- urban sensors (10);
- intelligent hubs (11);
- street lamps (12);
- electronic communication and control devices for public lighting (13) interacting with an advanced energy management system integrated with environmental sensors;
- artificial intelligence (16) for predictive data analysis and proactive maintenance;
- end-to-end encrypted communication modules (18);
- content delivery network (CDN);
- real-time feedback platform.

## Description

### Field of the invention

The invention falls within the field of advanced technological infrastructures for the management and analysis of urban data in Smart City contexts. The technology is based on highly reliable servers, storage and virtualization solutions, advanced security systems, and software for the integrated and synchronized optimization of the various information processes that exist in urban environments. It also includes the use of IoT sensors and artificial intelligence for generation, collection and analysis, including predictive and optimized energy management, rationalization of expenditure, efficiency and valorization of the territory, contributing to the evolution towards smart and sustainable cities.

### Prior art

The management of urban data in the context of "Smart Cities" is an area of growing relevance in a global context characterized by an intensification of urbanization and a pressing need to make cities more efficient, sustainable and livable. The patent idea behind this document is to create an advanced technological infrastructure, called "Smart Bureau 2.0", which is at the forefront of the "Smart City" sector, to respond to the new and growing needs of cities through specific functions. Such infrastructure aims to integrate and analyze urban data from heterogeneous sources, also integrating them with existing ones for the development of innovative KPIs, with the aim of optimizing the management of urban resources and improving the quality of life of citizens. The problem addressed by the invention is twofold: on the one hand, the need to efficiently manage the huge amount of data generated by a smart city, also providing for different levels of processing from centralized to edge; on the other, the urgent need to guarantee the security and protection of such data in a context increasingly exposed to cyber risks. Currently available solutions in the field of Smart Cities include a variety of technologies aimed at managing different aspects of urban life, such as traffic management, public lighting, waste collection and the provision of services to citizens. However, these solutions often operate in silos, without true integration and without a centralized platform that may collect, analyze and optimize the use of the collected data. Additionally, existing infrastructure may be limited in terms of scalability, flexibility and security, which are critical to the success of a Smart City. The solution proposed in the present patent application aims to overcome such limitations through the implementation of an advanced software platform capable of integrating data from heterogeneous sources, also integrating them with those that may already exist, and an architecture based on highly reliable servers, dedicated storage and virtualization solutions that guarantee maximum operability and a high level of data security, also providing for different levels of processing from centralized to edge, also through the development of artificial intelligence algorithms.

The present invention, through the implementation of a technologically advanced infrastructure called "Smart Bureau 2.0", clearly distinguishes itself from known solutions as it proposes a holistic and integrated approach to the management of urban data. The "Smart Bureau 2.0" system is configured as a platform that not only collects and analyzes data from a variety of sources, but is also adapted to optimize decision-making and operational processes within a Smart City, to support and ensure optimized energy management, rationalization of spending, efficiency and enhancement of the territory.

In detail, the solutions currently available in the Smart City sector tend to focus on single application areas, such as traffic management or public lighting, without however achieving true data integration. This lack of integration MAY lead to inefficiencies and fragmented management of urban resources.

Another critical aspect of existing solutions concerns data security. In an urban context, where the quantity and sensitivity of the information managed are considerable, cyber security becomes an essential factor. Most current infrastructures are not adequately equipped to deal with today's sophisticated cyber threats.

Communication between urban devices is another strong point of the proposed invention.

While pre-existing solutions may be limited by obsolete or insecure communication protocols, "Smart Bureau 2.0" implements a multifunctional communication network that uses end-to-end encrypted communication modules and a content distribution network (CDN) on which to apply advanced security policies which may always be updated, even remotely. This ensures not only the security of the transmitted data but also their efficient and real-time dissemination and constitutes a bulwark against possible external attacks.

The new features of the system, such as the integration of artificial intelligence for predictive analysis and the advanced energy management system, combined with the new and different smart city features which may be delivered to the citizen, represent a significant improvement compared to traditional solutions. These technologies allow the needs of Smart Cities to be anticipated and respond proactively to the needs of citizens, thus improving the quality and efficiency of urban services.

In conclusion, the present invention is characterized by its ability to integrate in an innovative and safe manner a plurality of technologies and processes, overcoming the limitations of currently known solutions. "Smart Bureau 2.0" represents a qualitative leap in the field of Smart Cities, offering an integrated platform that responds to the challenges posed by urbanization and technological evolution, while ensuring the safety, reliability and efficiency required to improve urban life in a sustainable way. This invention, therefore, represents a significant advancement in the prior art, introducing an innovative model for the management and optimization of intelligent urban infrastructures.

### Description of the invention

The present patent application for an industrial invention is intended to describe and claim an integrated urban data management system for "Smart City" type infrastructures provided with at least a new and alternative solution to the solutions known so far and/or to satisfy one or more needs perceived in the art and in particular deduced from what has been reported above. To achieve this goal, the inventors have developed an advanced technological infrastructure for smart cities based on different levels of processing from centralized to edge that aims to integrate and analyze urban data from heterogeneous sources in order to develop innovative KPIs, ensuring accessibility, data protection and operational efficiency for authorized users. Such infrastructure is designed to operate in a Smart City context, providing a multifunctional and secure communication network through connected urban devices and offering proactive monitoring and problem notification capabilities.

The integrated urban data management system for "Smart City" type infrastructures includes at least a set of highly reliable servers, dedicated storage and virtualization solutions. The servers are configured to provide optimal performance, high availability and high levels of security, while the dedicated storage is designed to allocate securely and in a structured manner the collected data. Virtualization is achieved using "Hyper-V" type technologies, which allows for the optimization of computing resources and the management of virtual machines. Additionally, the system uses a two-node failover cluster to ensure business continuity, even in the event of hardware or software failures, thus ensuring critical resilience for smart city functions.

In terms of security solutions, next-generation firewalls are implemented to protect the infrastructure from external and internal threats, providing content filtering, anti-virus and anti-spam capabilities. Antivirus solutions come with "live" updates to combat cyber threats in real time. The cloud-based backup and restore platform is designed to make backup copies of data and restore them if necessary, with encrypted access mechanisms verified through penetration tests to ensure maximum security. Advanced cyber security policies are provided for all levels of processing from centralized to edge.

To complete the infrastructure, urban sensors are distributed throughout the city to detect and analyze environmental and traffic data, contributing to a more efficient and smart management of urban resources. These sensors, together with the networked street lamps, act as nodes of a multifunctional communication network that allows not only public lighting but also the collection and transfer of data to the control center. Such network is an integral part of the urban data management system, which through the analysis and processing of collected data, supports the decision and implementation of strategies for a smart city more efficient and responsive to the needs of citizens and the environment.

Antivirus solutions implemented in the advanced technological infrastructure for smart cities preferably include at least a real-time protection system against malicious software and cyber threats in addition to advanced security criteria and policies and information security management, with the aim of ensuring confidentiality, integrity and availability. These solutions are configured to provide "live" updates, enabling immediate response to new threats as soon as they become known to security databases. The effectiveness of this system is guaranteed by the presence of:
- an automatic update mechanism that ensures that virus definitions and detection signatures are always up to date, reducing the time of exposure to new threats;
- a scalable architecture that allows updates to be distributed rapidly across all servers and devices connected to the "Smart City" infrastructure, without negatively impacting network performance;
- a behavioral analysis system that monitors running processes, identifying suspicious activity that may indicate the presence of as-yet-unknown malware;
- different levels of data and access management on which to implement appropriate security policies;
- segmentation of accesses at different levels of the system architecture;
- a system for continuously measuring whether the implemented controls are working as intended and for making continuous improvements also based on repeated assessments and the consequent treatment of risks;
- the implementation of the most stringent international industry standards, present and future.

Advantageously, the firewalls integrated into the "Smart Bureau 2.0" are configured with advanced content filtering, anti-virus and anti-spam capabilities, which work in synergy to provide a defensive barrier against external and internal attacks. These firewalls are preferably characterized by:
- deep packet inspection modules that examine network traffic to detect and block potentially malicious content before it reaches the internal network;
- ability to identify and neutralize phishing and spam attempts through real-time analysis of email communications, thus ensuring the security of organizational communications;
- integration with the artificial intelligence system for predictive analysis, which allows firewalls to proactively adapt and respond to new threats, improving the resilience of the infrastructure over time.

Additionally, firewall configuration is designed to be dynamic and centrally manageable, allowing system administrators to update security policies efficiently and in a timely manner. The integration and operation of these antivirus solutions and next-generation firewalls combined with multi-level access management and segmentation of the system architecture are very important for data protection and operational continuity of the "Smart Bureau 2.0" infrastructure, and represent a crucial element in ensuring the effectiveness and security of the integrated urban data management system for "Smart City" type infrastructures.

The cloud-based backup and restore system, if present, includes at least the following interconnected elements:
- a cloud computing infrastructure that provides scalable and geographically distributed computing and storage resources, ensuring maximum data availability and redundancy;
- a set of advanced cryptographic algorithms for encrypted access to data, designed to ensure the confidentiality and integrity of information during all backup and restore steps;
- a plurality of secure communication protocols that establish end-to-end encrypted channels between client devices and the cloud, for the transmission of backup data and restoration thereof;
- backup management software that automates data saving and recovery procedures, allowing authorized users to configure customized backup policies and monitor the status of processes in real time;
- a versioning system which maintains multiple copies of data at configurable time intervals, allowing recovery to specific points in time to maximize protection against accidental loss or corruption;
- regular penetration testing procedures that evaluate the system's robustness against external attacks by simulating intrusion attempts and identifying potential vulnerabilities to mitigate.

The preferred operation of the backup and restore system is divided into several steps. Initially, the backup management software identifies the data to be saved according to the policies set by authorized users. This data is then encrypted using advanced algorithms before leaving the client device, ensuring that only those in possession of the encryption key can access the information. Once encrypted, the data is transmitted through secure channels to the cloud, where it is stored in a distributed manner across multiple data centers to ensure redundancy and resistance to physical failure.

Saved data is accessible for restore only to users with the appropriate credentials, who can request recovery at any time. The versioning system allows the specific version of the backup to restore to be selected, providing flexibility if one needs to recover data from a certain point in time. During the restore process, the data is decrypted and transmitted back to the client device through an encrypted channel, ensuring that the process is transparent and secure. Penetration testing procedures are preferably performed periodically to verify the security of the infrastructure and management software. These tests are essential to detect and mitigate any vulnerabilities, thus ensuring that the backup and restore system always remains protected from external threats.

The internal process management software preferably includes a modular software architecture, user interfaces optimized for accessibility, advanced data processing algorithms and integration capabilities with existing systems of the "Smart Bureau 2.0" infrastructure. This software is designed to work in synergy with high-availability servers, dedicated storage and other components of the advanced technological infrastructure for smart cities, with the aim of improving the efficiency and effectiveness of the processes of collection, analysis and management of urban data.

The modular software architecture is configured to allow easy expansion and customization of functionality, based on the specific needs of the smart city project. This modular approach ensures that the software can be updated and adapted to support new technologies, the release of new and additional features, and integration requirements that may emerge over time.

The user interfaces are designed with the best latest generation technologies to be intuitive and easily accessible and inclusive, allowing authorized operators to interact effectively with the system without the need for advanced technical training. These interfaces facilitate the input of new data, the visualization of analysis results, the provision of planned services and the monitoring of KPIs developed for the smart city.

Advantageously, advanced data processing algorithms are configured to efficiently and effectively process and analyze large volumes of data collected from urban sensors and other IoT devices integrated into the infrastructure. These algorithms are able to identify meaningful patterns, perform predictive analysis and support data-driven decisions for proactive maintenance and optimization of urban services.

Finally, the software preferably comes with integration features that allow connecting securely and reliably with existing systems, such as domain and email provider, Microsoft Office 365, and cloud-based backup and restore platform. This integration ensures that the flow of information is continuous and that the data is protected and accessible only to authorized users. In conclusion, internal process management software is a crucial element of the advanced technological infrastructure for smart cities, being designed to optimize information processing and to ensure that the collected data is used effectively for the continuous improvement of urban services.

The integrated urban data management system for "Smart City" type infrastructures includes at least the use of machine-to-machine (M2M) technologies for automatic interaction between networked devices. These technologies enable direct communication and information exchange between the various nodes without human intervention, playing a fundamental role in the automation and operational efficiency of the system.

Within the infrastructure of the present invention, M2M technologies are preferably implemented through a series of communication protocols and industrial standards that allow integration and cooperation between different devices, such as urban sensors, connected street lamps and intelligent hubs. The application of these technologies is crucial to the implementation of a multifunctional communication network that acts as the backbone of the Smart City ecosystem.

The key components and their interaction in the context of M2M technologies are as follows:
- urban sensors: installed at strategic points in the city, these sensors collect environmental, traffic, meteorological and other data. They are designed to operate autonomously and to transmit the collected information to data processing nodes or directly to central servers;
- connected street lamps: they act as communication nodes and are provided with integrated sensor devices. These lamps not only provide lighting but also connectivity, acting as access points for the collection and relay of data collected by urban sensors;
- connected street furniture: these elements provide connectivity, generate data of various kinds, acting as access points for the collection and relaunch of data collected by urban sensors;
- intelligent hubs: these devices are configured to receive data from sensors, street furniture and street lamps, process it and transmit it to the data management platform. They can also send commands to adjust devices based on the analyses performed;
- Data management and digital services software: this software processes data received from intelligent hubs and sensors, using artificial intelligence algorithms for predictive analysis and proactive management of urban resources. The software is able to send automatic commands to M2M devices to optimize operations based on the analyzed data;
- Real-time feedback platform: allows citizens to interact with urban infrastructure and provide information that can be immediately processed and used securely to improve services.

The effectiveness of the system relies on the ability of these devices to communicate securely and reliably. To ensure the security of transmitted data, the system integrates end-to-end encrypted communication modules. These modules are configured to encrypt data as it is captured by sensors and keep it protected during transmission over the network until it reaches central servers or analytics platforms.

The integration of artificial intelligence modules into the advanced technological infrastructure for "Smart City", described in the first independent claim, comprises at least the following concrete and tangible elements that interact with each other:
- Machine Learning and Deep Learning algorithms, hosted on highly reliable servers, which analyze data flows from urban sensors and IoT devices to identify patterns and trends useful for predicting future events with a high degree of precision;
- computer vision algorithms, hosted on highly reliable servers and edge devices to identify patterns and trends useful for predicting future events with a high degree of accuracy;
- artificial intelligence software modules, implemented within the server operating system, which enable real-time data processing and interpretation, providing a basis for proactive maintenance and predictive management of urban resources;
- application programming interfaces (APIs), which enable communication and integration of AI modules with other components of the infrastructure, such as the energy management system and the real-time feedback platform, facilitating the exchange of information and synergy between the various systems;
- high-capacity databases, part of dedicated storage, configured to store and manage large volumes of historical and real-time data needed for training and continuously improving AI algorithms;
- sensor devices integrated into public lighting and other devices and/or street furniture, which provide the environmental and usage data necessary for predictive analysis, such as traffic flows, energy consumption, weather conditions and other indicators relevant for the "Smart City".

These AI modules are configured to work autonomously and proactively, even at the edge level, identifying potential problems in urban infrastructure and/or in the immediate vicinity before they occur, thus enabling timely interventions and reducing downtime. For example, they can predict the wear and tear of street lamps and schedule their replacement at optimal times and/or by identifying vehicle/pedestrian traffic indices in the area, minimizing the impact on traffic and city services.

Furthermore, artificial intelligence helps to optimize the use of energy resources, analyzing data from environmental sensors and IoT devices to adapt energy consumption based on actual needs, reducing waste and contributing to a more sustainable and efficient management of the city.

The collaboration between the AI modules and the real-time feedback platform also allows for the integration of citizen observations and reports into the predictive analysis process, further refining the system's ability to effectively respond to community needs.

The advanced energy management system for the "Smart City" includes at least the following concrete and tangible elements: environmental sensors, energy control devices, optimization algorithms and interface platforms for the management and analysis of energy data. This system is configured to interact synergistically with the advanced technological infrastructure described above, in particular with the sensor devices integrated into public lighting and with IoT devices.

Environmental sensors are strategically distributed throughout the urban area and are configured to detect parameters such as ambient brightness, temperature, motion, and other relevant data that influence energy consumption. These sensors are connected to a communication network that connects them to energy control devices.

Energy control devices are programmable electronic systems that receive data from environmental sensors and, through the use of optimization algorithms, determine the most energy-efficient configuration of lighting fixtures and IoT devices. These devices are able to dynamically adjust the light intensity of networked street lamps and manage the power supply of IoT devices based on operational needs and detected environmental data.

Optimization algorithms are developed to process data collected by sensors and make real-time decisions regarding energy management. They are configured to maximize energy efficiency, reduce waste and adapt to various urban scenarios, such as adapting lighting based on the day-night cycle or the presence of people in specific areas.

Interface platforms for energy data management and analysis are integrated into the infrastructure of the present invention and allow authorized users to monitor, analyze and manage the energy consumption of the entire urban network. These platforms are configured to collect consumption data, provide detailed reporting and support proactive maintenance by reporting anomalies or inefficiencies.

In conclusion, the advanced energy management system is designed to operate in close integration with the advanced technological infrastructure for smart cities, leveraging the data collected by environmental sensors and data processing capabilities to optimize energy consumption in an intelligent and sustainable manner.

The end-to-end encrypted communication module preferably includes the following concrete and tangible elements:
- a set of advanced encryption algorithms, which are configured to encrypt data as it is generated by urban sensors or other IoT devices;
- unique and dynamic encryption keys, which are generated and managed by a centralized key management system to ensure the integrity and non-repudiability of information;
- security protocols for data transmission, which include authentication mechanisms and verification of the identity of the devices involved in the communication, to prevent "man-in-the-middle" attacks or other forms of interception;
- a communications session management system that maintains network efficiency while ensuring that each session is uniquely protected and may not be compromised without compromising the entire communications system.

The operation of end-to-end encrypted communication modules is preferably structured through the following steps:
1. Communication initialization: when an IoT device or urban sensor starts a data transmission, the end-to-end encrypted communication module activates security protocols to establish a secure connection with the data management platform;
2. key generation: the key management system provides a unique encryption key for the current communication session, ensuring that the data is readable only by the recipient platform;
3. data encryption: data is encrypted on the source device before being transmitted over the network, making it inaccessible to potential interceptors;
4. secure transmission: encrypted data is sent to the data management platform through communication channels protected by security protocols;
5. decryption and authentication: once received by the data management platform, the data is decrypted using the corresponding encryption key. The system also verifies the authenticity of the source to confirm that the data has not been altered during transmission.

The design and implementation of these end-to-end encrypted communication modules are intended to be scalable and adaptable to different types of devices and sensors used in the Smart City, thus ensuring a high level of security for a wide variety of data, from environmental data to data related to urban services. End-to-end encryption is a key element in protecting citizens' privacy and safeguarding sensitive information managed by the integrated urban data management system, significantly contributing to the public's trust and acceptance of Smart City technologies.

Street lamps, which act as physical nodes of the network, are equipped with communication and control devices that allow them to connect to the content distribution network. These devices are configured to transmit and receive data through secure and protected connections, thus ensuring the integrity and confidentiality of the information exchanged.

The data management and digital services platform, located within the Smart City server infrastructure, is designed to process and store content to be distributed through the CDN. This platform is provided with advanced content management software, which allows Smart City operators to organize, update and distribute information dynamically and in real time.

The software modules dedicated to content distribution are installed both on the data management platform and on the communication devices of the street lamps. These modules are configured to optimize content distribution based on various parameters, such as the geographic location of the nodes, the time, and the type of content. Furthermore, they are able to adapt the distribution based on user behavior and preferences, by virtue of the integration with data analysis systems and artificial intelligence.

The content delivery network (CDN) is designed to use existing infrastructure, such as street lamps, not only for lighting but also as access points for the distribution of digital services. This approach allows the implementation and maintenance costs to be reduced, while increasing the capillarity and effectiveness of the network of services offered to citizens.

The operation of the CDN on which to apply advanced security policies which may always be updated even remotely is characterized by a series of processes that include the collection of contents from the management platform, their processing and optimization for distribution, their secure transfer to the distribution nodes, and finally their presentation to citizens through user interfaces accessible from mobile devices or public terminals. These processes are supported by advanced encryption technologies and reliable communication protocols to ensure that content is delivered securely and seamlessly.

The real-time feedback platform includes at least a set of user interfaces, communication modules and a data processing system. These elements are configured to operate synergistically within the infrastructure of the integrated urban data management system for "Smart City" type infrastructures, as described in the first independent claim.

The communication modules are configured to transmit the data collected by the user interfaces to the data processing system in a secure and reliable manner. These modules include at least end-to-end encrypted communication protocols, as specified in the dependent claims, to protect user privacy and the integrity of transmitted data. Communication occurs through the multifunctional communication network implemented in the street lamps, as described above, leveraging the existing infrastructure to reduce costs and increase efficiency. The data processing system is configured to analyze the feedback received in real time, using artificial intelligence modules to categorize and prioritize the reports. This system interacts directly with the data management and digital services software to activate automatic responses or forward reports to the relevant departments. Data processing occurs on highly reliable servers with dedicated storage, ensuring high performance and operational continuity, as described in the first independent claim.

Additionally, the real-time feedback platform is integrated with the cloud-based backup and restore system, ensuring data resilience in the event of failures or cyber attacks. The platform is configured to generate periodic reports and trend analysis, providing smart city managers with valuable tools for monitoring and continuously improving urban services.

### Description of the figures

The invention will be described hereinafter in at least a preferred embodiment by way of nonlimiting example with the aid of the accompanying figures, in which:

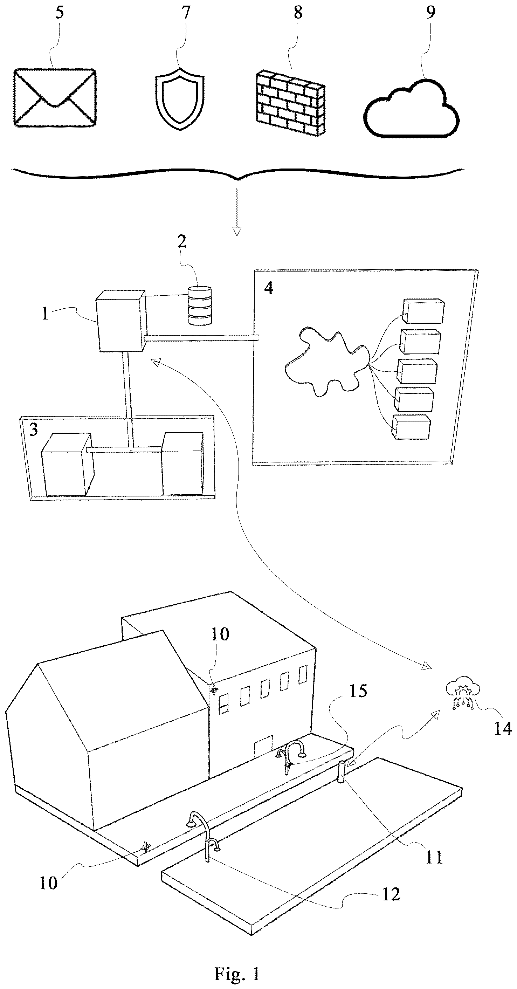

- FIGURE 1 represents an overall view of the infrastructure showing the interaction between the various tangible components. In the center of the image is physical server 1 connected to dedicated storage 2 and a two-node failover cluster 3. These are connected to a virtualizer 4, which allows the management of virtualized environments. Additionally, the domain and mail provider 5 are displayed as cloud services integrated into the infrastructure. To protect the system, there are the antivirus solutions 7 and the firewall 8, while the cloud-based backup and restore platform 9 is represented as an external service with encrypted connections. The infrastructure extends beyond the data center to include urban sensors 10 and intelligent hubs 11 positioned at strategic points in the city, connected to networked street lamps 12 and sensor devices integrated into public lighting 15. The data management and digital services software 14 is represented as the core of the analysis and management of the collected data.

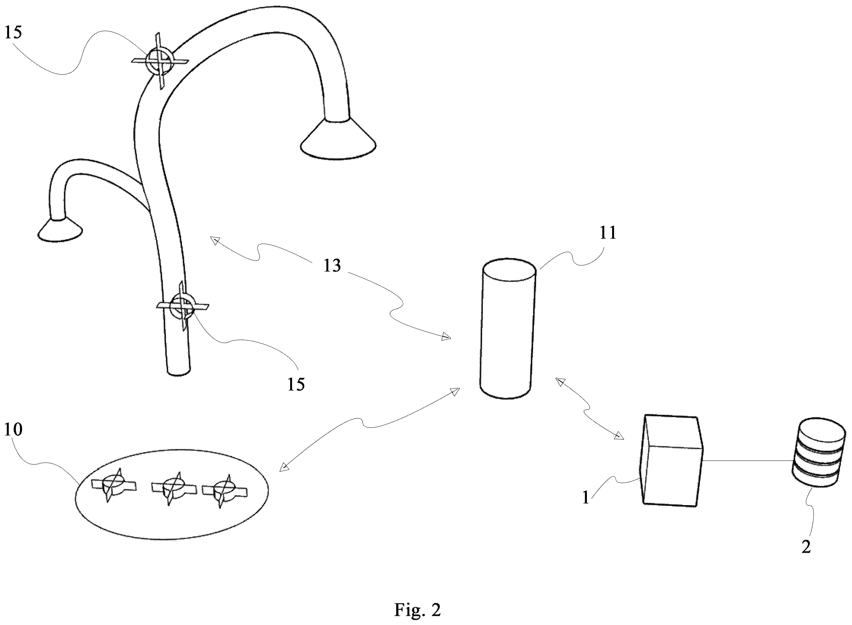

- FIGURE 2 focuses on a detailed representation of the system of street lamps and IoT devices used in the Smart City. In this figure, a street lamp connected in a network 12 is shown in detail, with its internal components such as integrated sensor devices 15 and communication and control equipment 13. These are connected to an intelligent hub 11 which collects and analyzes data. The hub is in turn connected to the network of physical servers 1 and dedicated storage 2. The figure also includes a representation of urban sensors 10 scattered around the city, which communicate with the hub 11 and the street lamps 12.

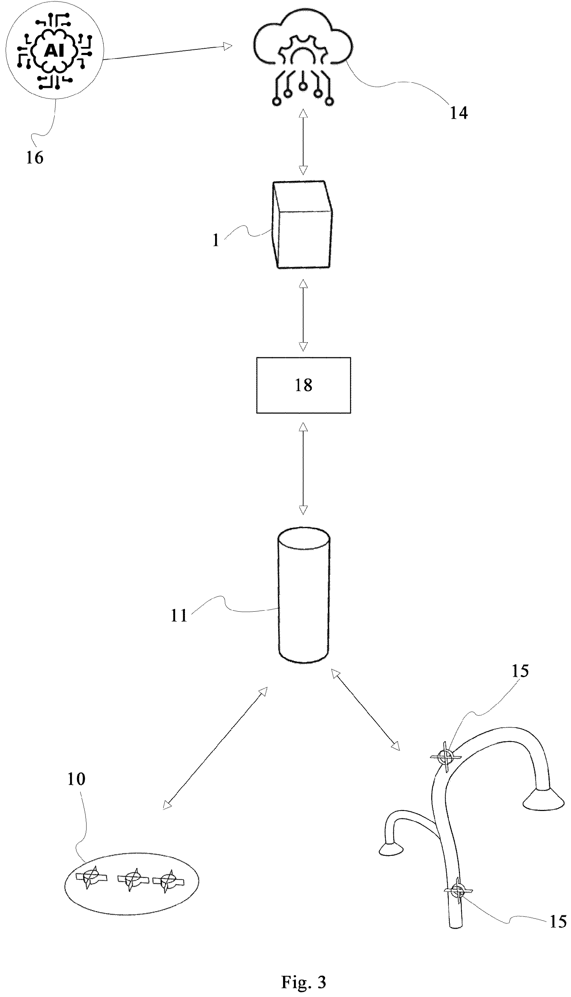

- FIGURE 3 is a diagram illustrating the data flow and operations within the infrastructure. Starting from the urban sensors 10 and the sensor devices 15, the collected data travels to the intelligent hubs 11, then passes through the end-to-end encrypted communication modules 18 to ensure security. The data arrives at the physical server 1 where it is processed by the data management software 14 with the aid of the artificial intelligence modules 16.

### Detailed description of the invention

It will be readily apparent that numerous variations and modifications (e.g., in shape, dimensions, arrangements, and functionally equivalent parts) may be made thereto without departing from the scope of the invention as set forth in the appended claims. With reference to the first figure, the present invention will now be illustrated by highlighting the interaction between the various tangible components. At the heart of the system is the physical server 1, the central element for data processing and management. This is connected to a dedicated storage 2, designed to store a large amount of information securely and easily accessible. A dual-node failover cluster 3 ensures system uptime by providing a high availability and redundancy mechanism. Connected to these, there is the virtualizer (Hyper-V) 4, which allows the creation and management of optimized virtual environments, contributing to the efficiency and scalability of the infrastructure. The domain and mail provider 5 is represented as an integral element that supports communication and collaboration in the cloud, while the antivirus solutions 7 and firewall 8 provide a robust layer of security against cyber threats, ensuring the protection of sensitive data and network operations. The cloud-based backup and restore platform 9 ensures data resilience through efficient and secure backup and recovery procedures.

Beyond the data center, the infrastructure extends into the smart city with urban sensors 10 and intelligent hubs 11 strategically placed to collect vital data for urban analytics. These are interconnected with networked street lamps 12, which act as communication nodes, and communication and control devices for public lighting 13, which enable advanced and integrated management of lighting.

In the preferred embodiment, the urban sensors 10 comprise at least: traffic detection sensors, ambient noise detection sensors, crowd detection sensors, suspicious or potentially dangerous event detection sensors such as public protests, explosions, fires or similar catastrophic events. The data management and digital services software 14 is the core for analyzing and managing collected data, transforming information into valuable insights for improving urban services. Sensor devices integrated into public lighting 15 provide additional environmental data, contributing to the creation of a smart and responsive urban fabric.

To enrich the infrastructure with cognitive capabilities, artificial intelligence modules 16 are implemented, which enable predictive analysis and proactive maintenance. The energy management system interacts with environmental sensors to optimize energy consumption, while end-to-end encrypted communication modules 18 ensure the security of transmitted data.

In particular, environmental sensors include at least: temperature sensors, environmental pollution sensors, humidity sensors, brightness sensors. If necessary, other types of environmental sensors may also be included in the system.

Finally, a content distribution network (CDN) uses existing infrastructure to provide information services to citizens, and a real-time feedback platform encourages citizen interaction with the infrastructure, promoting continuous improvement of urban services. The arrows in the figure indicate the flow of data and the interactions between the various elements, underlining the integration and synergy between the system components.

## Claims

1. Integrated urban data management system for "Smart City" type infrastructures, **characterized in that** it includes at least:
- a highly reliable physical server (1);
- a dedicated storage (2);
- a two-node failover cluster (3) configured to ensure operational continuity;
- a virtualizer (4);
- antivirus solutions (7);
- a firewall (8);
- a cloud-based backup and restore platform (9);
- a plurality of urban sensors (10) scattered across the urban territory and possibly integrated into street furniture elements, for the detection and analysis of data; said urban sensors including at least: traffic detection sensors, environmental noise detection sensors, sensors for detecting gatherings of people, sensors for detecting suspicious or potentially dangerous events such as public protests, explosions, fires or similar catastrophic events;
- a plurality of intelligent hubs (11) scattered across the urban area for data collection and analysis;
- a plurality of street lamps connected in a network (12) as nodes of a multifunctional communication network;
- communication and control equipment for public lighting (13) configured to interact with
- an advanced energy management system that interacts with a plurality of environmental sensors to optimize energy consumption based on the environmental and meteorological conditions detected;
- artificial intelligence modules (16) for predictive data analysis and proactive maintenance;
- end-to-end encrypted communication modules (18) for the security of transmitted data;
- a content distribution network (CDN) that uses existing infrastructure to provide information and services;
- a real-time feedback platform to allow citizens to interact with the urban infrastructure and contribute to the improvement of services.

2. Integrated urban data management system for "Smart City" type infrastructures, according to claim 1, **characterized in that** said antivirus solutions (7) are configured to perform real-time updates and to provide high performance in detection and neutralization of cyber threats.

3. Integrated urban data management system for "Smart City" type infrastructures, according to claim 1 or 2, **characterized in that** said firewall (8) is configured with content filtering, anti-virus and anti-spam capabilities, to guarantee the security of data in transit within the network.

4. Integrated urban data management system for "Smart City" type infrastructures, according to any of the preceding claims, **characterized in that** said cloud-based backup and restore platform (9) is configured to guarantee accessibility and security of data through encrypted access mechanisms and to be subjected to penetration tests to verify the robustness of the implemented security.

5. Integrated urban data management system for "Smart City" type infrastructures, according to any of the preceding claims, **characterized in that** it includes data management and digital services software (14) configured for the efficient management of internal processing processes of information and for the optimization of analysis and response operations to the data collected.

6. Integrated urban data management system for "Smart City" type infrastructures, according to any of the preceding claims, **characterized in that** it includes machine-to-machine (M2M) technologies configured to allow automatic interaction and integration operational between urban sensors (10), intelligent hubs (11) and other networked devices.

7. Integrated urban data management system for "Smart City" type infrastructures, according to any of the preceding claims, **characterized in that** said artificial intelligence modules (16) are configured for the predictive analysis of the data collected by urban sensors (10) and for the proactive maintenance of technological infrastructures, including physical servers (1) and IoT devices.

8. Integrated urban data management system for "Smart City" type infrastructures, according to any of the preceding claims, **characterized in that** said environmental sensors include at least: temperature sensors, environmental pollution sensors, humidity sensors, brightness sensors.

9. Integrated urban data management system for "Smart City" type infrastructures, according to claim 8, **characterized in that** said environmental sensors are mounted on said streetlamps connected to the network.
